# EUROPÄISCHE PATENTSCHRIFT

(11) **EP 1 413 532 B1**
(45) Veröffentlichungstag und Bekanntmachung des Hinweises auf die Patenterteilung: **03.01.2007**
(21) Anmeldenummer: 03103320.2
(22) Anmeldetag: 08.09.2003
(51) Int. Cl.: B65G 65/48, B07B 11/06, B02C 23/02

(54) **Speiseeinrichtung**
Feeder
Alimentateur

(30) Priorität: 21.10.2002 DE 10249108
(43) Veröffentlichungstag der Anmeldung: 28.04.2004
(73) Patentinhaber: Bühler AG, 9240 Uzwil (CH)
(72) Erfinder: Baumeler, Hans, CH-9244 Niederuzwil (CH)
(74) Vertreter: Frommhold, Joachim

(56) Entgegenhaltungen:
- EP-B- 0 602 557
- CH-A- 529 684
- DE-A- 3 824 700

## Beschreibung

Die Erfindung betrifft eine Speiseeinrichtung, insbesondere zum Speisen und Dosieren von Schüttgut gemäss Oberbegriff des Anspruchs 1.

Ein- und Zweistufenabscheider zum Abscheiden von Staub und/oder Schwerteilen aus einem Luftstrom sind bekannt. Bei einer bekannten Umlufttrenneinrichtung wird die zur Trennung quer zu einem Mahlgutstrom eingetragene Luft nach einem Schwerteiltrennbereich mit einer Schwerteilsammelvorrichtung in einem Trennbereich abgelenkt und im wesentlichen vom Feinanteil des Mahlgutes getrennt und anschliessend über einen Ventilator dem Schwerteiltrennbereich wieder zugeführt.

Aus der EP-B-602557 ist ein Speiseapparat, insbesondere zur Speisung einer Vertikalrotormühle mit zu mahlendem Gut bekannt, bei der eine Schwergutauslesung erfolgt. Der Speiseapparat weist einen, von einer gekrümmten Wandung eines Gehäuses umschlossenen Abscheideraum mit einer ersten und zweiten Ablenkfläche, enthaltend eine Schwerteilsammelvorrichtung und eine Trenneinrichtung auf, in der Luft vom Feinanteil eines zu mahlenden Gutes getrennt und anschliessend über ein Gebläse dem Trennbereich erneut zugeführt wird. Die Ablenkflächen bilden einen zentralen und teilweise offenen Absaugkanal. Im Einlassbereich des Gehäuses ist ein Federboden angeordnet, der einseitig an der dem Einlass zugewandten Seite fest eingespannt ist und dessen freies Ende in Richtung eines Dosierschiebers, in Abhängigkeit von der zugeführten Gutmenge verformbar ist.

Der Erfindung liegt die Aufgabe zugrunde, eine Speiseeinrichtung zu entwickeln, die ein flexibleres Speisen und Dosieren des zu mahlenden Gutes ermöglicht in einer kompakten Bauweise der Einrichtung ermöglicht. Die Aufgabe ist mit den Merkmalen des Anspruch 1 gelöst.

Unterhalb des Guteinlasses sind nebeneinander ein Dosierschieber und ein Mittel zur Zwangsspeisung, bevorzugt ein walzenförmiges Walmblech so angeordnet, dass durch das Mittel zur Zwangsspeisung das Gut beim Zuführen immer bewegt wird und zugleich eine Feindosierung erfolgt. Die Grobdosierung erfolgt durch den Dosierschieber.

Beide Speise- bzw. Dosierelemente sind bevorzugt stufenlos stellbar und die Drehbewegung des Mittels zur Zwangsspeisung ist bevorzugt frequenzgesteuert.

Die Speisung, insbesondere für Schlag- bzw. Rotormühlen kann spürbar verbessert und vereinfacht werden.

Die Zuordnung einer Aspirations- bzw. einer Umlufttrenneinrichtung ist möglich.

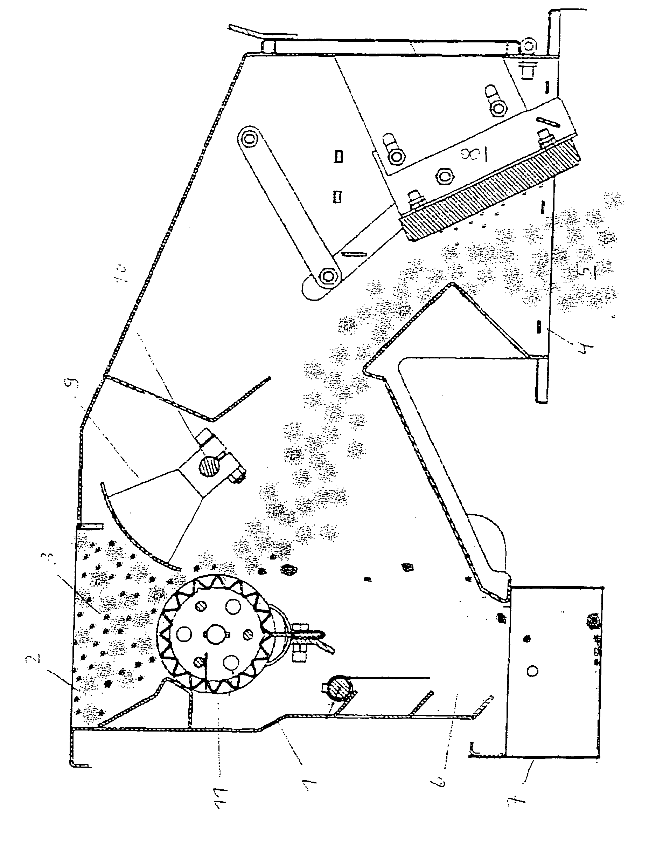

Die Erfindung wird nachfolgend in einem Ausführungsbeispiel anhand einer Zeichnung näher beschrieben. Die Zeichnung zeigt eine Speiseeinrichtung in einer Schnittdarstellung.

Eine Speiseeinrichtung weist ein Gehäuse 1 einen Einlass 2 für ein Schüttgutgemisch 3, einen Auslass 4 für Schüttgut 5 sowie einen Schwerteilauslass 6 mit einem zugeordneten Sammelbehälter 7 für Schwerteile auf. Etwa parallel zur Fliessrichtung des Schüttgutes 5 ist eine Magneteinrichtung 8 zur Entfernung von Metallteilen vorgesehen.

Unterhalb des Einlasses 2 sind ein, um eine Lagerstelle 10 schwenkbarer Dosierschieber 9 und Mittel zur Zwangsdosierung in Form eines walzenförmig geformten Walmbleches 11 angeordnet. Das Walmblech 11 ist mittels eines frequenzgesteuerten Antriebes drehbar. Das zu speisende und zu dosierende Schüttgutgemisch ist daher ständig bewegbar, so dass ein Aufstauen oder Ablagern selbst bei schwerfliessendem Gut vermeidbar ist. Während mit dem Dosierschieber 9 eine Grobdosierung des Schüttgutgemischs erfolgt, dient das Walmblech 11 auch der Feindosierung. Dosierschieber 9 und Walmblech 11 sind stufenlos verstellbar.

Der Einlass 2 ist so gestaltet, dass er bei Bedarf vollständig durch den Dosierschieber 9 und das Walmblech 11 verschliessbar ist.

Der Auslass 4 für das Schüttgut 5 ist so mit dem Guteinlass einer Schlagmühle verbunden, dass die Speiseeinrichtung oberhalb dieser angeordnet ist.

## Patentansprüche

1. Speiseeinrichtung zum Speisen und Dosieren von Schüttgut in einen Abscheider zur Abscheiden von Teilen aus einem Luftstrom, wobei einem Einlass (2) für ein Schüttgutgemisch (3) ein Dosierschieber (9) zur Dosierung des Schüttgutstromes nachgeordnet ist, **dadurch gekennzeichnet, dass** etwa parallel zum Dosierschieber (9) ein Mittel zur Zwangsdosierung angeordnet ist.

2. Speiseeinrichtung nach Anspruch 1, **dadurch gekennzeichnet, dass** das Mittel zur Zwangsdosierung als walzenförmig geformtes und drehbar gelagertes Walmblech (11) ausgebildet ist.

3. Speiseeinrichtung nach Anspruch 1 oder 2, **dadurch gekennzeichnet, dass** Dosierschieber (9) und Walmblech (11) stufenlos verstellbar sind.

## Claims

1. A feeder for feeding and metering loose material in a separator for separating parts from an air stream, wherein a metering slider (9) for metering the loose material stream is situated downstream from an inlet (2) for a loose material mixture (3), **characterized in that** a force-metering means is arranged roughly parallel to the metering slider (9).

2. The feeder according to claim 1, **characterized in that** the force-metering means is designed as a roll-shaped and rotatably mounted hipped sheet (11).

3. The feeder according to claim 1 or 2, **characterized in that** the metering slider (9) and hipped sheet (11) are continuously adjustable.

## Revendications

1. Dispositif d'alimentation dans un séparateur, pour la séparation d'éléments à partir d'un flux d'air, pour l'alimentation et le dosage de produit en vrac, une trappe de dosage (9) pour le dosage d'un flux de produit en vrac étant montée en aval d'une entrée (2) pour un mélange de produit en vrac (3), **caractérisé en ce qu'**un moyen de dosage forcé est disposé environ à la parallèle de la trappe de dosage (9).

2. Dispositif d'alimentation selon la revendication 1, **caractérisé en ce que** le moyen pour le dosage forcé est conçu sous la forme d'une tôle en croupe (11) moulée en forme de cylindre et logée en rotation.

3. Dispositif d'alimentation selon la revendication 1 ou 2, **caractérisé en ce que** la trappe de dosage (9) et la tôle en croupe (11) sont à réglage à action progressive.
